(19) Europäisches Patentamt / European Patent Office / Office européen des brevets

(11) **EP 2 234 128 A1**

(12) **EUROPEAN PATENT APPLICATION**

(43) Date of publication:
**29.09.2010 Bulletin 2010/39**

(51) Int Cl.:
*H01G 4/30* (2006.01)    *C03C 8/24* (2006.01)
*C04B 37/00* (2006.01)

(21) Application number: **10155855.9**

(22) Date of filing: **09.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **25.03.2009 JP 2009074428**

(71) Applicant: **TDK Corporation**
**Tokyo 103-8272 (JP)**

(72) Inventors:
• **Sakurai, Toshio**
**Tokyo 103-8272 (JP)**

• **Arashi, Tomohiro**
**Tokyo 103-8272 (JP)**
• **Kobuke, Hisashi**
**Tokyo 103-8272 (JP)**
• **Hatanaka, Kiyoshi**
**Tokyo 103-8272 (JP)**

(74) Representative: **Grünecker, Kinkeldey,**
**Stockmair & Schwanhäusser**
**Anwaltssozietät**
**Leopoldstrasse 4**
**80802 München (DE)**

(54) **Ceramic Electronic Component**

(57)    Provided is a ceramic electronic component that, even if it is formed by building up dielectric layers of different compositions, can ensure that the built-up dielectric layers are prevented from separating from each other. The ceramic electronic component according to the present invention has: a first dielectric layer containing, as major components thereof, BaO, $Nd_2O_3$ and $TiO_2$; a second dielectric layer containing a different composition from the first dielectric layer; and a boundary layer containing Zn and Ti, which is formed between the first dielectric layer and the second dielectric layer.

FIG. 1

**Description**

Cross-references to Related Applications

The present application relates to and claims priority from Japanese Patent Application No. 2009-074428, filed on March 25, 2009, the entire disclosure of which is incorporated herein by reference.

BACKGROUND OF THE INVENTION

Field of the Invention

The present invention relates to a ceramic electronic component.

Description of the Related Art

In the fields of mobile communication appliances such as cellular phones, audio-visual appliances and computer appliances, products have recently been becoming smaller and achieving higher performance, and smaller sizes and higher performance are also being required for various electronic components used in such products. In order to contribute to meeting the need for smaller sizes and higher performance of various electronic components, surface-mount devices (SMDs) that have conductors such as electrodes and wiring mounted therein (hereinafter, conductors such as electrodes and wiring mounted inside of the electronic device are referred to as "internal conductors") have become mainstream.
Also, techniques are being studied for co-firing several types of ceramic compositions with different material properties to form a multilayer ceramic electronic component, thereby fabricating an electronic device with improved properties. For example, LC filters formed by combining a magnetic material and a dielectric material, and circuit boards (devices, elements), or the like, having a condenser mounted therein and formed by combining a high dielectric constant material and a low dielectric constant material have been developed.
In such LC filters, by selecting a low dielectric constant material with a high Q-value as a ceramic material for the L part so as to have a high self-resonant frequency and selecting a high dielectric constant material with good temperature properties for the C part, the resulting LC device can achieve a high Q-value and good temperature properties.
In the case of condensers, by combining a high dielectric constant material and a low dielectric constant material, the resulting condenser can reduce distributed capacitance relative to a condenser formed of a high dielectric constant material alone, and can also achieve larger capacity than a condenser formed of a low dielectric constant material alone.
For example, Japanese Unexamined Patent Application Publication No. 2001-284807 (JP2001-284807A) discloses a circuit board formed by co-firing and integrating an insulating layer that exhibits a high relative permittivity in a microwave band and has a high Q-value, and an insulating layer having a low relative permittivity.

SUMMARY OF THE INVENTION

However, when co-firing materials of different compositions to form a multilayer electronic device with a plurality of dielectric layers, the resulting dielectric layers may fail to sufficiently adhere to each other, and thus, may separate (exfoliate). If such device is used as an electronic component, the dielectric layers would separate and cause a defect in the product. Accordingly, the materials of the dielectric layers to be combined may be limited (restricted), and there is a demand for developing techniques that can solve the above problem.
The present invention has been made in view of the above circumstances. An object of the present invention is to provide a ceramic electronic component that, even if it is formed by building up (laminating) dielectric layers with different compositions (materials), can ensure that the built-up (laminated, layered) dielectric layers are prevented from separating from each other.
As a result of extensive studies which took into account the above circumstances, the present inventors have found that by forming a boundary layer containing Zn and Ti between a first dielectric layer containing BaO, $Nd_2O_3$ and $TiO_2$ as its major components and a second dielectric layer containing a different composition from the first dielectric layer material, the first dielectric layer and the second dielectric layer are built up unexpectedly firmly with each other.
Namely, a ceramic electronic component according to the present invention has: a first dielectric layer containing, as major components thereof, BaO, $Nd_2O_3$ and $TiO_2$; a second dielectric layer containing a different composition from the first dielectric layer; and a boundary layer containing Zn and Ti, wherein the boundary layer is formed (or is located) between the first dielectric layer and the second dielectric layer.
In the present invention, a ceramic electronic component is preferably formed by co-firing (simultaneously firing), a first dielectric layer containing, as major components thereof, BaO, $Nd_2O_3$ and $TiO_2$, and a dielectric material containing a different material from the first dielectric layer and also containing Zn, whereby a boundary layer containing Ti and Zn can be formed between the built-up dielectric layers.

In the present invention, it is preferable that the first dielectric layer further includes Zn. As a result, the first dielectric layer and the second dielectric layer can be built up more firmly.

BRIEF DESCRIPTION OF THE DRAWINGS

Fig. 1 is a conceptual diagram illustrating a ceramic electronic component according to an embodiment of the present invention used as an LC filter.

Fig. 2 is a photograph substituted for a drawing, showing a COMPO (composition) image around a boundary in an integrated chip in Example 10.

Fig. 3 is a photograph substituted for a drawing, showing a COMPO image around a boundary in the center of an integrated chip in Example 10 after being fired.

Fig. 4 is a photograph substituted for a drawing, showing an EDS image of a Zn component in an integrated chip in Example 10.

Fig. 5 is a photograph substituted for a drawing, for showing an EDS image of a Ti component in an integrated chip in Example 10.

DESCRIPTION OF DESCRIPTION OF THE PREFERRED EMBODIMENTS

An embodiment of the present invention (hereinafter simply referred to as "the present embodiment") will be described below in detail. The following embodiment is just an example for describing the present invention, and the present invention is not limited thereto. The present invention can suitably be modified in various ways insofar as it does not depart from the gist of the present invention.

A ceramic electronic component of the present embodiment has: a first dielectric layer containing $BaO$, $Nd_2O_3$ and $TiO_2$ as its major components; a second dielectric layer containing a different composition from the first dielectric layer material; and a boundary layer containing Zn and Ti and formed between the first dielectric layer and the second dielectric layer.

First Dielectric Layer

The first dielectric layer of the present embodiment contains, as its major components, $BaO$, $Nd_2O_3$ and $TiO_2$.

The first dielectric layer contains, as its major components, at least $BaO$, $Nd_2O_3$ and $TiO_2$, and specific examples may include $BaO$-$Nd_2O_3$-$TiO_2$-based dielectric ceramics and $Bi_2O_3$-$BaO$-$Nd_2O_3$-$TiO_2$-based dielectric ceramics and the like. Here, there are no particular limitations on the amount (content, quantity) of each of $BaO$, $Nd_2O_3$ and $TiO_2$, and a suitable amount may arbitrarily be selected depending on desired properties, etc.

When using a $BaO$-$Nd_2O_3$-$TiO_2$-based compound, the compound is preferably a compound represented by the following general formula (1) wherein the relationships in (2)-(5) are met:

$$xBaO \cdot yNd_2O_3 \cdot zTiO_2 \qquad (1)$$

$$6.0 \leq x \text{ (mole\%)} \leq 23.0.. \quad (2)$$

$$13.0 \leq y \text{ (mole\%)} \leq 30.0. \quad (3)$$

$$64.0 \leq z \text{ (mole\%)} \leq 68.0. \quad (4)$$

$$x + y + z = 100......... \quad (5)$$

The first dielectric layer may contain other materials as the major components. Specific examples of the materials may include forsterite ($2MgO \cdot SiO_2$), enstatite ($MgO \cdot SiO_2$) and diopside ($CaO \cdot MgO \cdot 2SiO_2$). Of these, forsterite (generally represented by the chemical formula of $2MgO \cdot SiO_2$ or $Mg_2SiO_4$, and the former is used herein) is preferably used. $2MgO \cdot SiO_2$ is preferably contained in the dielectric layer in the form of forsterite crystal so that dielectric loss can be reduced. Whether the dielectric layer contains forsterite crystal or not can be observed using an x-ray diffractometer (XRD).

$BaO-Nd_2O_3-TiO_2$-based compounds have a high relative permittivity $\varepsilon r$ of approximately 55 to 105. Meanwhile, $2MgO \cdot SiO_2$ (forsterite) by itself has a low relative permittivity $\varepsilon r$ of approximately 6.8. In the ceramic electronic component of the present embodiment, the first dielectric layer contains, as its major components, a $BaO-Nd_2O_3-TiO_2$-based compound having a high relative permittivity $\varepsilon r$ and $2MgO \cdot SiO_2$ having a low relative permittivity $\varepsilon r$, and as a result, the relative permittivity $\varepsilon r$ of the first dielectric layer can suitably be reduced.

Also, $BaO-Nd_2O_3-TiO_2$-based compounds have a $Q \cdot f$ value (unit: GHz) of approximately 2000 to 8000 GHz. Meanwhile, $2MgO \cdot SiO_2$ (forsterite) by itself has a $Q \cdot f$ value of approximately 200000 GHz, and the dielectric loss of $2MgO \cdot SiO_2$ is smaller than the dielectric loss of $BaO-Nd_2O_3-TiO_2$-based compounds. In the present embodiment, a $BaO-Nd_2O_3-TiO_2$-based compound and forsterite, which has a smaller dielectric loss than $BaO-Nd_2O_3-Tio_2$-based compounds, are contained in the first dielectric layer as its major components, and the first dielectric layer can consequently be a dielectric layer with a small dielectric loss.

Note that the $Q \cdot f$ value (unit: GHz) shows the magnitude of dielectric loss, and is defined as the product of Q and f, wherein Q is the reciprocal of $\tan \delta$ (tangent of loss angle $\delta$, which is the difference between the actual current-and-voltage phase difference and the ideal current-and-voltage phase difference of 90°; $Q = 1 / \tan \delta$) and f is a resonance frequency.

In general, when applying alternating current to ideal dielectric ceramics, there is a 90-degree phase difference between current and voltage. However, as the frequency of the alternating current increases to become a high-frequency, the electric polarization or the orientation of polar molecules in the dielectric ceramics cannot follow the change to a high-frequency electric field, or electrons or ions conduct, and as a result, the electric flux density has a phase lag (phase difference) relative to the electric field, and the actual phase difference between current and voltage will be a value other than 90 degrees. Due to the above phase difference, part of the high-frequency energy is dissipated as heat, and that dissipation phenomenon is called dielectric loss. The magnitude of dielectric loss is shown by the above-mentioned $Q \cdot f$ value. The smaller the dielectric loss is, the greater the $Q \cdot f$ value is, and the greater the dielectric loss is, the smaller the $Q \cdot f$ value is.

Accessory Components

The first dielectric layer may further contain accessory components other than the major components. There are no particular limitations on the accessory components, and examples of the accessory components may include zinc oxides, boron oxides, bismuth oxides, cobalt oxides, manganese oxides, copper oxides, alkaline-earth metal oxides, glass, and the like. A preferable alkaline-earth metal oxide is calcium oxide. A preferable glass is glass containing lithium oxide.

By containing each of the above accessory components, the sintering temperature can be reduced, and as a result, the first dielectric layer can be fired at a temperature lower than the melting point of a conductive material which is composed of Ag-based metal and used for the internal conductors, etc.

There are no particular limitations on the amount of the accessory components, and the total amount of the accessory components is preferably from 1.0% to 20.0% by mass based on the total amount of the major components.

The amount of zinc oxide, which is one of the accessory components, is preferably equal to or greater than 0.1% by mass and not greater than 7.0% by mass, and more preferably equal to or greater than 1.5% by mass and not greater than 7.0% by mass, based on 100% by mass of the major components, when the zinc oxide mass is calculated on a ZnO basis.

The amount of boron oxide, which is one of the accessory components, is preferably equal to or greater than 0.1% by mass and not greater than 3.0% by mass, and more preferably equal to or greater than 1.0% by mass and not greater than 2.5% by mass, based on 100% by mass of the major components, when the boron oxide mass is calculated on a $B_2O_3$ basis.

The amount of bismuth oxide, which is one of the accessory components, is preferably equal to or greater than 1.0% by mass and not greater than 4.0% by mass, and more preferably equal to or greater than 1.5% by mass and not greater than 3.5% by mass, based on 100% by mass of the major components, when the bismuth oxide mass is calculated on a $Bi_2O_3$ basis.

The amount of cobalt oxide, which is one of the accessory components, is preferably equal to or greater than 0.5% by mass and not greater than 2.0% by mass, and more preferably equal to or greater than 1.0% by mass and not greater than 1.5% by mass, based on 100% by mass of the major components, when the cobalt oxide mass is calculated on a CoO basis.

The amount of manganese oxide, which is one of the accessory components, is preferably equal to or greater than 0.3% by mass and not greater than 1.5% by mass, and more preferably equal to or greater than 0.5% by mass and not greater than 1.0% by mass, based on 100% by mass of the major components, when the manganese oxide mass is calculated on a $MnO_2$ basis.

The amount of copper oxide, which is one of the accessory components, is preferably equal to or greater than 0.1% by mass and not greater than 2.0% by mass, and more preferably equal to or greater than 0.7% by mass and not greater than 1.3% by mass, based on 100% by mass of the major components, when the copper oxide mass is calculated on a CuO basis.

The amount of calcium oxide, which is alkaline-earth metal oxide and is one of the accessory components, is preferably equal to or greater than 0.1% by mass and not greater than 1.5% by mass, and more preferably equal to or greater than 0.5% by mass and not greater than 1.5% by mass, based on 100% by mass of the major components, when the calcium oxide mass is calculated on a CaO basis.

The amount of glass, which is one of the accessory components, is preferably equal to or greater than 2.0 % by mass and not greater than 7.0% by mass, and more preferably equal to or greater than 4.0% by mass and not greater than 5.5% by mass, based on 100% by mass of the major components.

Second Dielectric Layer

The second dielectric layer of the present embodiment is a dielectric layer containing a different material from the first dielectric layer. Any type of dielectric layer may be used as the second dielectric layer as long as it contains a different composition from the first dielectric layer, and known dielectric layers may be employed. Specific examples of the composition of the dielectric layer may include forsterite ($2MgO \cdot SiO_2$), enstatite ($MgO \cdot SiO_2$) and diopside ($CaO \cdot MgO \cdot 2SiO_2$). Of these, a dielectric layer containing forsterite as its major component is preferably used because of having a low relative permittivity $\varepsilon r$ and high Q· f value.

Here, when saying that the second dielectric layer is "a dielectric layer containing a different material from the first dielectric layer", all that is required is that the components of the second dielectric layer are not completely the same as the components of the first dielectric layer. For example, the second dielectric layer may contain some of the components of the first dielectric layer.

Boundary Layer

The boundary layer of the present embodiment is formed between the first dielectric layer and the second dielectric layer, and contains Zn and Ti. When the boundary layer containing Zn and Ti exists between the first dielectric layer and the second dielectric layer, the first dielectric layer, boundary layer and second dielectric layer can be firmly built up. Although the details of the above mechanism have yet to be found, it can be assumed that since Zn and Ti are contained in the boundary layer, a $ZnTiO_3$ based crystalline phase with good reactivity is formed in each material at a relatively low temperature, resulting in improved bonding strength.

There are no particular limitations on the form of Zn (Zn-based materials), and examples of the form of Zn may include zinc oxide, zinc sulfate and zinc chloride. Of these, ZnO is preferred in view of the effect of the remaining anions after firing on the electric properties of the chip, in particular, the chip lifetime observed in a reliability test.

There are no particular limitations on the form of Ti (Ti-based materials), and examples of the form of Ti may include titanium oxide and titanium chloride. Of these, $TiO_2$ is preferred in view of the effect of the remaining anions after firing on the electric properties of the chip, in particular, the chip lifetime observed in a reliability test.

In the present embodiment, there are no particular limitations on the mixture ratio between the Ti and Zn components.

The boundary layer may contain CuO, MgO, CoO, $Fe_2O_3$ or NiO as other materials.

Although the thickness of the boundary layer is not particularly limited and a suitable thickness may arbitrarily be selected depending on the materials, etc., of the first and second dielectric layers, the upper limit of the thickness is preferably 10μm so that the dielectric properties near the boundary can be maintained, and the lower limit of the thickness is preferably 1μm so that the dielectric layers can be built up more firmly.

In the present embodiment, the boundary layer may not necessarily be separated from the first and second dielectric layers with clearly defined borders.

There are no particular limitations on the process for forming the boundary layer, and a preferable process is to form the boundary layer through a reaction based on the co-firing of the first and second dielectric layers. With this process, the first dielectric layer, the materials that can constitute the boundary layer, and the second dielectric layer react with each other, and consequently, the boundary layer is formed between the first and second dielectric layers, and the first dielectric layer, the materials that can constitute the boundary layer, and the second dielectric layer can be integrated.

In the present embodiment, it is preferable that the first dielectric layer containing BaO, $Nd_2O_3$ and $TiO_2$ as its major components and a dielectric material containing a different material from the first dielectric layer and also containing Zn are co-fired (simultaneously fired). With this co-firing, Zn in the dielectric material containing a different material from the first dielectric layer and also containing Zn reacts with Ti in the first dielectric layer, resulting in the formation of the boundary layer containing Zn and Ti, and also in the formation of the second dielectric layer. As a result, the first dielectric layer and the second dielectric layer are firmly built up via the boundary layer. Zn may be contained in the dielectric material as a sintering additive, in the form of zinc oxide, etc.

In the present embodiment, it is preferable that the first dielectric layer also contains Zn. If the first dielectric layer also contains Zn, the dielectric layers can be more firmly built up as a result of co-firing. Zn may be contained in the first dielectric layer as a sintering additive, in the form of zinc oxide, etc.

Examples of the reaction conditions may include, but are not limited to, firing at a temperature of 870°C to 940°C. In particular, firing at 900°C for 2.5 hours is preferred.

Ceramic Electronic Components

A ceramic electronic component according to the present embodiment can be suitably utilized, for example, as a component of a multilayer device, which is a type of high-frequency device. A multilayer device is fabricated from a multilayer ceramic substrate composed of a plurality of ceramic layers with which dielectric devices such as a condenser and an inductor are formulated integrally (embedded to form an integrated body). This multilayer ceramic substrate can be prepared by forming through holes in green sheets of dielectric ceramic compositions with different dielectric properties, building up the green sheets in multiple layers, and co-firing these layers. Other examples of electronic components that can be manufactured may include a low-pass filter (LPF), band-pass filter (BPF), diplexer (DPX), coupler (directional coupler), and balun (balanced-to-unbalanced impedance transformer).

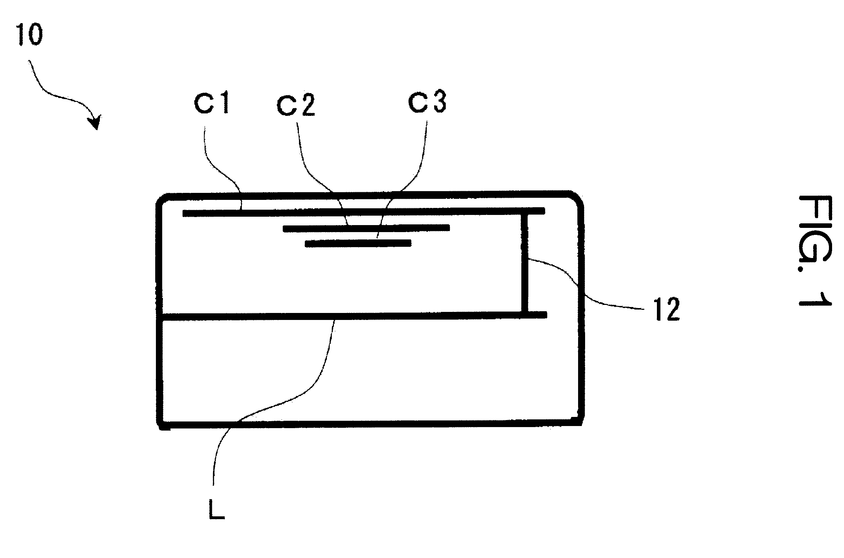

Fig. 1 shows a conceptual diagram (schematic cross-sectional view) illustrating a ceramic electronic component according to the present embodiment used as an LC filter. In Fig. 1, reference numeral 10 shows an LC filter. The LC filter 10 has a condenser part including condensers C1, C2 and C3, and a coil part with a coil L. The condenser part and the coil part are connected through a via (via conductor) 12. The condenser part of the LC filter 10 is formed of three layers of condensers, but the ceramic electronic component of the present embodiment is not limited thereto, and any multilayer configuration may arbitrarily be employed. The ceramic electronic component of the present embodiment is an SMD-module multilayer device, and as such, may suitably be used for high-frequency LC filters.

When manufacturing a multilayer device, the dielectric ceramic composition of the present embodiment is mixed with, for example, an organic binder, such as a polyvinyl alcohol-based, acrylic-based, or ethyl cellulose-based binder, and the resulting mixture is sheet-formed to obtain a green sheet. As to the process for forming the green sheet, a wet forming process such as a sheet process and a printing process may be used, and dry forming such as pressing may also be used.

After that, the obtained green sheet and other green sheets having different dielectric properties are built up in alternate layers, with Ag-based metal, which is a conductive material serving as an internal electrode, arranged between the alternate layers, and the layered product is cut in a desired size to form a green chip. The obtained green chip is treated to remove the binder, and then fired to obtain a sintered object. The chip is preferably fired under an oxygen atmosphere, e.g., in air. The firing temperature is preferably equal to or lower than the melting point of the Ag-metal used as a conductive material. More specifically, the temperature is preferably from 860°C to 1000°C, and more preferably from 870°C to 940°C. By forming an external electrode, etc., in the obtained sintered object, a multilayer device having an internal electrode of Ag-based metal is manufactured.

EXAMPLES

The present invention will now be described in more detail by way of examples thereof. It should however be borne in mind that the present invention is not limited to or by those examples.

(1-1) Preparation of BaNdTiO-based Oxide ($BaO$-$Nd_2O_3$-$TiO_2$ Ceramics) Material

24.36% by mass of barium carbonate ($BaCO_3$), 40.29% by mass of neodymium hydroxide ($Nd(OH)_3$), and 35.35% by mass of titanium oxide ($TiO_2$) were weighed (to be 100% by mass in total), and the weighed powder was put in a nylon ball mill, to which ion-exchange water and a commercially available dispersant were added to prepare a 25% concentration slurry. The resulting slurry was mixed for 16 hours.

The mixed slurry was collected and dried at 120°C for 24 hours. After that, the resulting dried mass was ground using a Wiley mill, and the ground mass then passed through a #30 mesh sieve. The collected powder was put in a sagger of magnesia, and pre-fired in an electric furnace at 1270°C for 2 hours under an air atmosphere to obtain a pre-fired powder of the base material (referred to as a "first pre-fired powder").

Based on 100% by mass of the first pre-fired powder, 1.5% by mass of boron oxide ($B_2O_3$), 2.0% by mass of zinc oxide (ZnO) and 1.0% by mass of copper oxide (CuO) were weighed, and the weighed powder was put in a nylon ball mill, to which ion-exchange water was added to prepare a 33% concentration slurry. The resulting slurry was mixed for 16 hours.

The mixed slurry was collected and dried at 120°C for 24 hours. After that, the resulting dried mass was ground using a Wiley mill, and the ground mass then passed through a #300 mesh sieve. The collected powder was put in a sagger of magnesia, and pre-fired in an electric furnace at 750°C for 2 hours under an air atmosphere to obtain a pre-fired powder of a mixture of the base material and additives (referred to as a "second pre-fired powder").

99% by mass of the obtained second pre-fired powder and 1% by mass of Ag powder were weighed, and the weighed powder was put in a nylon ball mill, to which alcohol was added to prepare a 33% concentration slurry. The resulting slurry was mixed for 16 hours to obtain a finely-ground finished material.

The mixed alcohol slurry was collected and dried at a temperature of from 80°C to 120°C for 24 hours. After that, the resulting dried mass was ground using a Wiley mill, and the ground mass then passed through a #300 mesh sieve to obtain a finished material.

(1-2) Preparation of BaNdTiO-based Oxide (BaO-$Nd_2O_3$-$TiO_2$ Ceramics) Sheets

Desired amounts of commercially available toluene (first grade), alcohol (special grade), dispersant and acrylic resin lacquer were mixed with the finished material obtained in the above-mentioned process, put in a polyethylene ball mill, and mixed for 16 hours to obtain a slurry for the formation of sheets. The resulting mixture was sheet-formed with a doctor blade method, and as a result, several sheets were prepared.

(2-1) Preparation of MgO·$SiO_2$ Ceramics Material

6.0% by mass of boron oxide ($B_2O_3$), 16.0% by mass of zinc oxide (ZnO), 4.0% by mass of copper oxide (CuO) and 2.0% by mass of calcium carbonate ($CaCO_3$) were weighed based on 100% by mass of forsterite ($2MgO·SiO_2$), and the weighed powder was put in a nylon ball mill, to which ion-exchange water was added to prepare a 33% concentration slurry. The resulting slurry was mixed for 16 hours.

The mixed slurry was collected and dried at 120°C for 24 hours. After that, the resulting dried mass was ground using a Wiley mill, and the ground mass then passed through a #300 mesh sieve. The collected powder was put in a sagger of magnesia, and pre-fired in an electric furnace at 750°C for 5 hours under an air atmosphere to obtain a pre-fired powder of a mixture of the base material and additives.

100% by mass of the obtained pre-fired powder and 0.38% by mass of lithium carbonate ($Li_2CO_3$) were weighed, and the weighed powder was put in a nylon ball mill, to which alcohol was added to prepare a 33% concentration slurry. The resulting slurry was mixed for 16 hours to obtain a finely-ground finished material.

The mixed alcohol slurry was collected and dried at a temperature of from 80°C to 120°C for 24 hours. After that, the resulting dried mass was ground using a Wiley mill, and the ground mass then passed through a #300 mesh sieve to obtain a finished material.

(2-2) Preparation of $2MgO·SiO_2$ Ceramics Material Sheets

Desired amounts of commercially available toluene (first grade), alcohol (special grade), dispersant and acrylic resin lacquer were mixed with the finished material obtained in the above-mentioned process, put in a polyethylene ball mill, and mixed for 16 hours to obtain a slurry for the formation of sheets. The resulting slurry was sheet-formed with a doctor blade method, and as a result, several sheets were prepared.

(3-1) Method of Forming BaNdTiO-based Oxide and $2MgO·SiO_2$ Ceramics Composite Material

24.36% by mass of barium carbonate ($BaCO_3$), 40.29% by mass of neodymium hydroxide ($Nd(OH)_3$) and 35.35% by mass of titanium oxide ($TiO_2$) were weighed (to be 100% by mass in total), and the weighed powder was put in a nylon ball mill, to which ion-exchange water and a commercially available dispersant were added to prepare a 25% concentration slurry. The resulting slurry was mixed for 16 hours.

The mixed slurry was collected and dried at 120°C for 24 hours. After that, the resulting dried mass was ground using a Wiley mill, and the ground mass then passed through a #30 mesh sieve. The collected powder was put in a sagger of magnesia, and pre-fired in an electric furnace at 1270°C for 2 hours under an air atmosphere to obtain a pre-fired powder of the base material (referred to as a "first pre-fired powder").

Based on 68.4% by mass of the first pre-fired powder, 31.4% by mass of forsterite ($2MgO \cdot SiO_2$) was weighed (so that the sum of the first pre-fired powder and forsterite would be 100% by mass), and 2.48% by mass of boron oxide ($B_2O_3$), 6.67% by mass of zinc oxide (ZnO), 3.14% by mass of bismuth oxide ($Bi_2O_3$), 1.12% by mass of cobalt oxide (CoO), 0.66% by mass of manganese carbonate ($MnCO_3$), and 1.07% by mass of calcium carbonate ($CaCO_3$) were also weighed. The weighed powder was put in a nylon ball mill, to which ion-exchange water was added to prepare a 33% concentration slurry. The resulting slurry was mixed for 16 hours.

The mixed slurry was collected and dried at 120°C for 24 hours. After that, the resulting dried mass was ground using a Wiley mill, and the ground mass then passed through a #300 mesh sieve. The collected powder was put in a sagger of magnesia, and pre-fired in an electric furnace at 750°C for 2 hours under an air atmosphere to obtain a pre-fired powder of a mixture of the base material and additives (referred to as a "second pre-fired powder").

100% by mass of the obtained second pre-fired powder and 0.75% by mass of Ag powder were weighed, and the weighed powder was put in a nylon ball mill, to which alcohol was added to prepare a 33% concentration slurry. The resulting slurry was mixed for 16 hours to obtain a finely-ground finished material.

The mixed alcohol slurry was collected and dried at a temperature of from 80 to 120°C for 24 hours. After that, the resulting dried mass was ground using a Wiley mill, and the ground mass then passed through a #300 mesh sieve to obtain a finished material.

(3-2) Preparation of BaNdTiO-based Oxide and $2MgO \cdot SiO_2$ Ceramics Composite Material Sheets

Desired amounts of commercially available toluene (first grade), alcohol (special grade), dispersant and acrylic resin lacquer were mixed with the finished material obtained in the above-mentioned process, put in a polyethylene ball mill, and mixed for 16 hours to obtain a slurry for the formation of sheets. The resulting slurry was sheet-formed with a doctor blade method, and as a result, several sheets were prepared.

Examples 1-10 and Comparative Examples 1-6

Using the above obtained (1) BaNdTiO-based oxide, (2) $2MgO \cdot SiO_2$ and (3) composite of BaNdTiO-based oxide and $2MgO \cdot SiO_2$, integrated chips were prepared under the conditions shown in table 1, and the prepared chips were observed concerning: the main diffuse components in the boundary reaction layer; the state of immersion into the boundary reaction layer after plating; the boundary reaction layer thickness; and the state of separation (exfoliation) of the dielectric layers. The results are collectively shown in tables 1 and 2. The integrated chips were prepared and evaluated in the same manner as Example 10, which is shown below as one example, except that the conditions were changed in each case as shown in tables 1 and 2.

Example 10: Manufacture of Integrated Chip Using BaNdTiO-based Oxide and $2MgO \cdot SiO_2$ Composite Material Sheets

(From Start) to Firing

On a $BaO-Nd_2O_3-TiO_2$ ceramics sheet, the form of a desired condenser pattern (a pattern resulting in a chip form of 4.5 mm in the longitudinal direction and 3.2 mm in the width direction after firing) was printed with Ag paste (manufactured by TDK Corporation), and the printed sheet was dried at 120°C for 15 minutes.

After that, using $2MgO \cdot SiO_2$ ceramics sheets and the printed $BaO-Nd_2O_3-TiO_2$ ceramics sheets for an outer layer part and an inner layer part respectively, the sheets were built up (to form a product having four inner layers) and pressed at 70°C and 700 kg/cm for 7 minutes. The resulting layered product was cut in a desired condenser form by a wet cutting method, treated in a batch furnace at 350°C for one hour to remove the binder, and thereafter fired at 900°C for 2.5 hours under an air atmosphere. As a result, an integrated chip was obtained.

After Firing to Plating

In order to form external terminals at the ends of the fired integrated chip, a commercially available Ag paste for external terminals was applied to both ends of the chip by hand, dried at 120°C for 15 minutes, and fired in a continuous firing furnace (manufactured by LINDBERG/MPH) at 670°C. After the firing of the ends, the resulting chip was subjected to Cu-Ni-Sn plating using an in-house electroplating system. Each step of plating was carried out to achieve a desired thickness, and as a result, the plated integrated chip was obtained.

Integrated Chip Observation Method - Separation in Boundary

Three surfaces (plane surface, side surface and end surface) of the obtained integrated chip were observed using a metallographic microscope, and each sample was checked in n=10 parts with respect to whether there was any abnormality, such as separation.

Integrated Chip Observation Method - Diffusion Thickness in Boundary

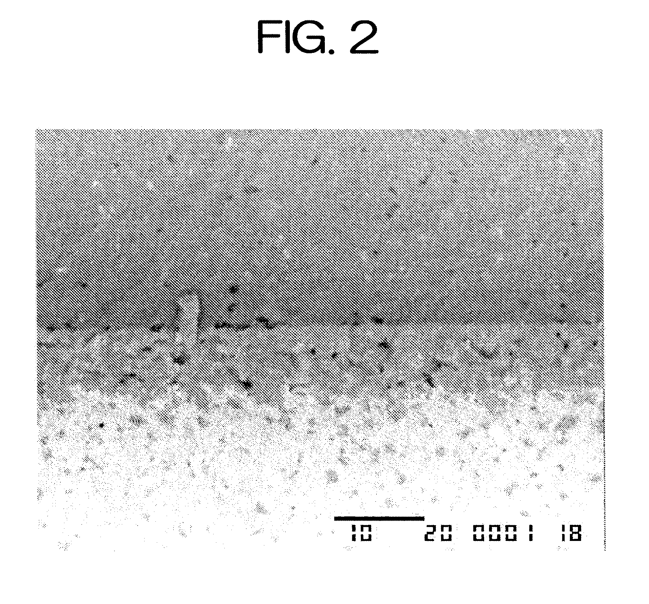

The obtained integrated chip was cut with pliers, and the boundary appearing in the cut surface was observed using a scanning electron microscope ("JSM-T300" manufactured by of JEOL, Ltd.), to take a COMPO (composition) image (2000-fold magnification) of the boundary after the firing for integration and measure the thickness of diffusion in the boundary using a scaler associated with the microscope. Fig. 2 shows a COMPO image around the boundary in the integrated chip in Example 10. As shown in Fig. 2, the chip was observed as having a lower layer being a first dielectric layer (BaNdTiO-based Oxide) and an upper layer being a second dielectric layer ($2MgO-SiO_2$ ceramics material). The chip was also observed as having a boundary reaction layer (thickness: $10\mu m$) formed between the upper and lower layers. In other words, it was observed that as a result of the co-firing, a boundary reaction layer was formed between the upper and lower layers through a reaction.

Integrated Chip Observation Method - Plating-resistant Property in Boundary

The obtained integrated chip was cut with pliers, and the boundary appearing in the cut surface was observed using a scanning electron microscope ("JSM-T300" manufactured by JEOL, Ltd.), to take a COMPO image (2000-fold magnification) of the boundary after the firing for integration and determine whether the boundary has a plating-resistant property or not.

Integrated Chip Observation Method - Diffuse Elements in Boundary

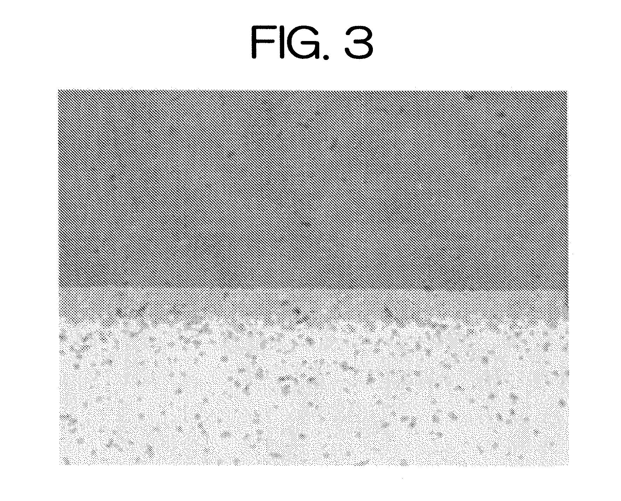

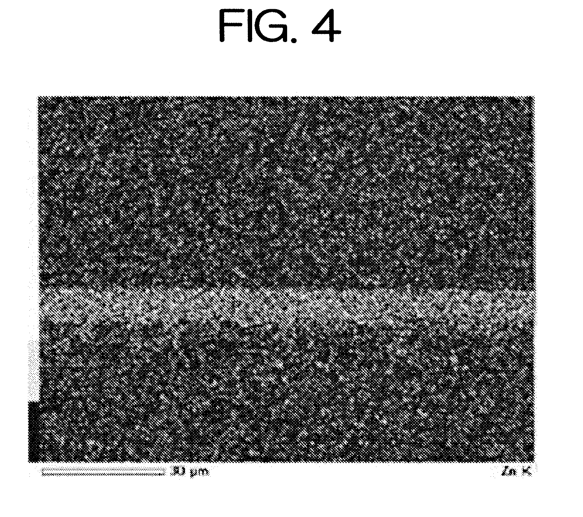

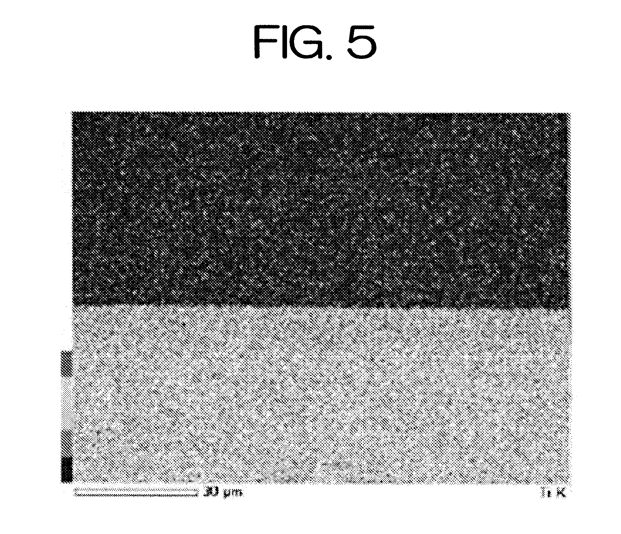

The obtained integrated chip was implanted in a container using a commercially-available epoxy resin, and polished with a polishing agent to have a mirror finish. After that, the polished face was subjected to SEM-EDS observation using a scanning electron microscope ("JSM-6700" manufactured by JEOL, Ltd.), to take an EDS image (2000-fold magnification) of the boundary after the firing for integration and find the state of elements diffusing in the boundary. Fig. 3 shows a COMPO image around the boundary in the center of the integrated chip in Example 10 after the firing. Fig. 4 shows an EDS image of a Zn component in the integrated chip in Example 10. Fig. 5 shows an EDS image of a Ti component in the integrated chip in Example 10.

Table 1

| | First dielectric layer | | Second dielectric layer | | Main diffuse components in boundary reaction layer | Immersion after plating | Boundary reaction layer thickness | Separation |
|---|---|---|---|---|---|---|---|---|
| | Aggregate composition | Sintering additives | Aggregate composition | Sintering additives | | | | |
| Example 1 | BaNdTiO-based oxide | ZnO, CuO, $B_2O_3$, Ag | BaNdTiO-based oxide + $2MgO \cdot SiO_2$ | ZnO, $B_2O_3$, CoO, MnO, $Bi_2O_3$, CaO, Ag, CuO | ZnO, $TiO_2$ | No immersion | 3 $\mu$m | No separation |
| Example 2 | BaNdTiO-based oxide | ZnO, CuO, $B_2O_3$, Ag | BaNdTiO-based oxide + $2MgO \cdot SiO_2$ | ZnO, $B_2O_3$, $Bi_2O_3$, CaO, Ag | ZnO, $TiO_2$ | No immersion | 3 $\mu$m | No separation |
| Example 3 | BaNdTiO-based oxide | ZnO, CuO, $B_2O_3$, Ag | BaNdTiO-based oxide + $2MgO \cdot SiO_2$ | ZnO, $B_2O_3$, CoO, MnO, $Bi_2O_3$, Ag, Li-based glass | ZnO, $TiO_2$ | No immersion | 3 $\mu$m | No separation |
| Example 4 | BaNdTiO-based oxide + $2MgO \cdot SiO_2$ | ZnO, $B_2O_3$, CoO, MnO, $Bi_2O_3$, CaO, Ag, CuO | $2MgO \cdot SiO_2$ $2MgO \cdot SiO_2$ | ZnO, CuO, $B_2O_3$, Na-based glass | ZnO, $TiO_2$ | No immersion | 10 $\mu$m | No separation |
| Example 5 | BaNdTiO-based oxide + CoO, MnO, $2MgO \cdot SiO_2$ | ZnO, $B_2O_3$, $Bi_2O_3$, CaO, Ag | $2MgO \cdot SiO_2$ | ZnO, CuO, $B_2O_3$, Na-based glass | ZnO, $TiO_2$ | No immersion | 10 $\mu$m | No separation |
| Example 6 | BaNdTiO-based oxide + $2MgO \cdot SiO_2$ | ZnO, $B_2O_3$, CoO, MnO, $Bi_2O_3$, Ag, Li based glass | $2MgO \cdot SiO_2$ | ZnO, CuO, $B_2O_3$, Na-based glass | ZnO, $TiO_2$ | No immersion | 10 $\mu$m | No separation |
| Example 7 | BaNdTiO-based oxide + $2MgO \cdot SiO_2$ | ZnO, $B_2O_3$, CoO, MnO, $Bi_2O_3$, CaO, Ag, CuO | $2MgO \cdot SiO_2$ | ZnO, CuO, $B_2O_3$, Li-based glass | ZnO, $TiO_2$ | No immersion | 10 $\mu$m | No separation |
| Example 8 | BaNdTiO-based oxide + $2MgO \cdot SiO_2$ | ZnO, $B_2O_3$, CoO, MnO, $Bi_2O_3$, CaO, Ag | $SiO_2$ $2MgO \cdot SiO_2$ | ZnO, CuO, $B_2O_3$, Li-based glass | ZnO, $TiO_2$ | No immersion | 10 $\mu$m | No separation |

(continued)

| | First dielectric layer | | Second dielectric layer | | Main diffuse components in boundary reaction layer | Immersion after plating | Boundary reaction layer thickness | Separation |
|---|---|---|---|---|---|---|---|---|
| | Aggregate composition | Sintering additives | Aggregate composition | Sintering additives | | | | |
| Example 9 | BaNdTiO-based oxide + $2MgO \cdot SiO_2$ | ZnO, $B_2O_3$, CoO, MnO, $Bi_2O_3$, Ag, Li-based glass | $2MgO \cdot SiO_2$ | ZnO, CuO, $B_2O_3$, Li- based glass | ZnO, $TiO_2$ | No immersion | 10 $\mu$m | No separation |
| Example 10 | BaNdTiO-based oxide | ZnO, CuO, $B_2O_3$, Ag | $2MgO \cdot SiO_2$ | ZnO, CuO, $B_2O_3$, CaO, $Li_2CO_3$ | ZnO, $TiO_2$ | No immersion | 10 $\mu$m | No separation |

Table 2

| | First dielectric layer | | Second dielectric layer | | Main diffuse components in boundary in reaction layer | Immersion after plating after | Boundary reaction layer thickness | Separation |
|---|---|---|---|---|---|---|---|---|
| | Aggregate composition | Sintering additives | Aggregate composition | Sintering additives | | | | |
| Comparative Example 1 | BaNdTiO-based oxide | CuO, $B_2O_3$, Ag | BaNdTiO-based oxide + $2MgO \cdot SiO_2$ | ZnO, $B_2O_3$, CoO, MnO, $Bi_2O_3$, CaO, Ag | Boundary reaction layer not formed | Immersion occurred | -- | Separation occurred |
| Comparative Example 2 | BaNdTiO-based oxide | CuO, $B_2O_3$, Ag | BaNdTiO-based oxide + $2MgO \cdot SiO_2$ | $B_2O_3$, CoO, MnO, $Bi_2O_3$, CaO, Ag | Boundary reaction layer not formed | Immersion occurred | -- | Separation occurred |
| Comparative Example 3 | BaNdTiO-based oxide + $2MgO \cdot SiO_2$ | ZnO, $B_2O_3$, CoO, MnO, $Bi_2O_3$, CaO, Ag | $2MgO \cdot SiO_2$ | CuO, $B_2O_3$, Na-based glass | Boundary reaction layer not formed | Immersion occurred | -- | Separation occurred |
| Comparative Example 4 | BaNdTiO-based oxide + $2MgO \cdot SiO_2$ | $B_2O_3$, CoO, MnO, $Bi_2O_3$, CaO, Ag | $2MgO \cdot SiO_2$ | CuO, $B_2O_3$, Na-based glass | Boundary reaction layer not formed | Immersion occurred | -- | Separation occurred |
| Comparative Example 5 | BaNdTiO-based oxide | ZnO, CuO, $B_2O_3$, Ag | $2MgO \cdot SiO_2$ | CuO, $B_2O_3$, CaO, $Li_2CO_3$ | Boundary reaction layer not formed | Immersion occurred | - | Separation occurred |
| Comparative Example 6 | BaNdTiO-based oxide | CuO, $B_2O_3$, Ag | $2MgO \cdot SiO2$ | CuO, $B_2O_3$, CaO, $Li_2CO_3$ | Boundary reaction layer not formed | Immersion occurred | - | Separation occurred |

In Examples 1-10, the main diffuse components of the boundary reaction layer were observed as being ZnO and $TiO_2$. Also, no separation was found when the first dielectric layer and the second dielectric layer were integrated, and no immersion was found in the boundary reaction layer after the plating treatment. On the other hand, a boundary reaction layer was not observed to be formed in any of Comparative Examples 1-4. Also, a separation was found when the first dielectric layer and the second dielectric layer were integrated, and an immersion was also found after the plating treatment. According to the above examples, the dielectric layers of the ceramic electronic component in the present embodiment were found to be built up sufficiently firmly so that the built-up dielectric layers would not separate from each other.

Industrial Applicability

The ceramic electronic component according to the present invention can be utilized in a wide range of fields as various electronic devices such as LC filters and various types of condensers.

The present invention can provide a ceramic electronic component that, even if it is formed by building up dielectric layers of different compositions, can ensure that the built-up dielectric layers are prevented from separating from each other.

**Claims**

1. A ceramic electronic component comprising:

   a first dielectric layer containing, as major components thereof, BaO, $Nd_2O_3$ and $TiO_2$;
   a second dielectric layer containing a different composition from the first dielectric layer; and
   a boundary layer containing Zn and Ti, which is formed between the first dielectric layer and the second dielectric layer.

2. A ceramic electric component formed by co-firing a first dielectric layer that contains, as major components thereof, BaO, $Nd_2O_3$ and $TiO_2$, and a dielectric material that contains a different material from the first dielectric layer and also contains Zn.

3. The ceramic electric component according to claim 2, wherein the first dielectric layer further contains Zn.

# FIG. 1

# FIG. 2

FIG. 3

# FIG. 4

# FIG. 5

Europäisches
Patentamt

European
Patent Office

Office européen
des brevets

## EUROPEAN SEARCH REPORT

Application Number

EP 10 15 5855

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/064669 A1 (OOBUCHI TAKESHI [JP] ET AL) 30 May 2002 (2002-05-30) | 1,2 | INV.<br>H01G4/30<br>C03C8/24<br>C04B37/00 |
| Y | * paragraph [0050] - paragraph [0054] * | 3 | |
| | * paragraph [0060] - paragraph [0072]; figures 1-4 * | | |
| Y | EP 1 795 512 A1 (TDK CORP [JP]) 13 June 2007 (2007-06-13) | 3 | |
| A | * paragraph [0014] - paragraph [0035] * | 1,2 | |
| | * paragraph [0150] - paragraph [0158] * | | |
| A | EP 1 721 878 A1 (MURATA MANUFACTURING CO [JP]) 15 November 2006 (2006-11-15) | 1-3 | |
| | * paragraph [0041] - paragraph [0110]; figures 1,4-6 * | | |

TECHNICAL FIELDS
SEARCHED (IPC)

H01G
H05K
C03C
C04B

The present search report has been drawn up for all claims

| Place of search | Date of completion of the search | Examiner |
|---|---|---|
| Munich | 23 July 2010 | Frias Rebelo, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 15 5855

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2010

| Patent document cited in search report | | Publication date | Patent family member(s) | | Publication date |
|---|---|---|---|---|---|
| US 2002064669 | A1 | 30-05-2002 | NONE | | |
| EP 1795512 | A1 | 13-06-2007 | WO | 2006036021 A1 | 06-04-2006 |
| | | | KR | 20070038166 A | 09-04-2007 |
| | | | TW | 266756 B | 21-11-2006 |
| EP 1721878 | A1 | 15-11-2006 | WO | 2005082806 A1 | 09-09-2005 |
| | | | JP | 4371141 B2 | 25-11-2009 |
| | | | KR | 20060033905 A | 20-04-2006 |
| | | | US | 2006293168 A1 | 28-12-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009074428 A
- JP 2001284807 A